# EUROPÄISCHE PATENTSCHRIFT

(11) **EP 0 593 905 B1**
(45) Veröffentlichungstag und Bekanntmachung des Hinweises auf die Patenterteilung: **27.11.1996**
(21) Anmeldenummer: 93114918.1
(22) Anmeldetag: 16.09.1993
(51) Int. Cl.: B62B 3/10

(54) **Von Hand bewegbarer Transportwagen**
Handcarts
Chariots de transport à main

(30) Priorität: 18.09.1992 DE 9212615 U; 19.01.1993 DE 9300573 U
(43) Veröffentlichungstag der Anmeldung: 27.04.1994
(73) Patentinhaber: Wanzl GmbH & Co. Entwicklungs-KG, D-89336 Leipheim (DE)
(72) Erfinder: Heinisch, Klaus, D-86513 Ursberg (DE); Schantini, Georg, D-86480 Aletshausen (DE); Wanzl, Rudolf, D-89340 Leipheim (DE)

(56) Entgegenhaltungen:
- DE-U- 8 517 521
- FR-A- 2 258 294

## Beschreibung

Die Erfindung betrifft einen von Hand bewegbaren Transportwagen, der in einen gleichen Transportwagen einschiebbar ist, der mit wenigstens einem Abstellbereich für Gepäck, Einkaufsgut oder dgl. ausgestattet ist und der ein Fahrgestell aufweist, das an dem der Schiebeeinrichtung zugeordneten Ende zwei Fahrrollen und an seinem vorderen Ende wenigstens eine Fahrrolle trägt, wobei die auf Höhe der Schiebeeinrichtung befindlichen hinteren Fahrrollen über eine Bremseinrichtung mit der auf zwei aufrechten Rohrpfosten ruhenden und verschwenkbar gelagerten Schiebeeinrichtungen derart in Verbindung stehen, daß bei einem Loslassen der Schiebeeinrichtung die hinteren Fahrrollen automatisch gebremst sind und eine Kopplungseinrichtung vorgesehen ist, die ein Ankoppeln des Transportwagens an einen weiteren Transportwagen erlaubt, wobei die Kopplungseinrichtung ein Verriegelungsteil aufweist, das in gekoppeltem Zustand einen Teil des weiteren Transportwagens hintergreift.

Das deutsche Gebrauchsmuster DE 85 17 521.8 beschreibt einen derartigen Transportwagen. Am hinteren Bereich des Fahrgestelles dieses Transportwagens sind zum Zwecke des Ankoppelns zweier Transportwagen zu beiden Seiten je ein Verriegelungsteil angeordnet, wobei jedes Verriegelungsteil eine Auflaufschräge mit anschließender Vertiefung aufweist. Die Vertiefungen sind dann zur Aufnahme einer Querverbindung eines vorausbefindlichen Transportwagens vorgesehen, wenn zwei Transportwagen platzsparend ineinandergeschoben werden. Durch das gegenseitige Ankoppeln der Transportwagen sollen nicht nur Kurvenfahrten eines Stapels solcher Transportwagen möglich sein, sondern es soll auch erreicht werden, daß sich beim Bewegen eines Stapels von Transportwagen einzelne Transportwagen nicht von selbst vom Stapel lösen. Dies nämlich kann dann gefährlich werden, wenn ein Stapel solcher Transportwagen auf einer Gefällstrecke bewegt wird. Unkontrolliert wegrollende Transportwagen können aber eine Gefahr für Personen darstellen oder Beschädigungen an Gegenständen, wie z.B. parkende Autos, verursachen. Es hat sich inzwischen als Mangel herausgestellt, daß die Vertiefungen an den Auflaufschrägen dieser Transportwagen nicht zu stark ausgeprägt sein dürfen. Ansonsten würde die Entnahme von Transportwagen aus einem Stapel unnötig erschwert werden. Somit läßt sich bei diesen Transportwagen nicht verhindern, daß sich beim Befahren von Gefällstrecken oder von stark unebenem Boden trotzdem immer wieder einzelne Transportwagen aus einem Stapel lösen.

Die Aufgabe der Erfindung besteht deshalb darin, einen Transportwagen der gattungsgemäßen Art zu schaffen, bei dem sichergestellt ist, daß sich beim Bewegen eines Stapels von Transportwagen selbst dann nicht einzelne Transportwagen oder Transportwagengruppen vom Stapel lösen, wenn relativ starke Erschütterungen oder Bodenunebenheiten auf die Transportwagen einwirken und bei dem aufgrund seiner Gestaltung trotzdem sichergestellt ist, daß das Entnehmen eines letzten Transportwagens oder einer Transportwagengruppe aus einem Stapel ineinandergeschobener gleicher Transportwagen problemlos und ohne großen Kraftaufwand durchführbar ist.

Die Aufgabe ist erfindungsgemäß dadurch gelöst, daß das Verriegelungsteil verschwenkbar gelagert, und federbeaufschlagt, mittels eines Verbindungsteiles mit der Schiebeeinrichtung verbunden und durch Verschwenken der Schiebeeinrichtung bewegbar ist.

Der Vorteil der Erfindung besteht darin, daß die Bewegbarkeit des Verriegelungsteiles von der Verschwenkbarkeit der Schiebeeinrichtung abhängig ist. Der Transportwagen kann nämlich nur dann bewegt werden, wenn durch Verschwenken der Schiebeeinrichtung die Bremsen gelöst sind. Dieser Vorgang des Verschwenkens bewirkt aber auch, daß das federbeaufschlagte Bremsteil nach unten bewegt wird. Dadurch lassen sich folgende Effekte ausnützen:
Beim Ineinanderschieben zweier Transportwagen unterfährt das nach unten geschwenkte Verriegelungsteil eine Querverbindung eines vorausbefindlichen Transportwagens. Sind die Transportwagen ineinandergeschoben, schwenkt beim Loslassen des Schiebebügels des eingeschobenen Transportwagens dessen Verriegelungsteil nach oben und hintergreift die Querverbindung, also einen Teil des vorausbefindlichen Transportwagens. Dadurch findet ein Kopplungsvorgang der beiden Transportwagen statt. Die Wagen können sich beim Befahren von unebenem Boden oder Gefällstrecken nicht voneinander lösen.
Im Gegensatz zum bisherigen Stand der Technik ist auch die Entnahme eines letzten Wagens aus einem Stapel Transportwagen mühelos und ohne weitere Handgriffe der Bedienperson möglich. Da der Transportwagen dem Stapel nur dann entnommen werden kann, wenn die Bremsen gelöst sind, muß beim Entnehmen eines Transportwagens dessen Schiebeeinrichtung nach unten oder nach oben verschwenkt werden. In beiden dieser Fälle wird aber auch das Verriegelungsteil nach unten verschwenkt, so daß der Transportwagen einem Stapel weiterer Transportwagen entnommen werden kann, weil beim Herausziehen des Transportwagens das Verriegelungsteil dieses Transportwagens die Querverbindung des vorausbefindlichen Transportwagens unterfährt. Die Bedienperson merkt im Grunde nicht, daß sie mit dem Lösen der Bremse auch gleichzeitig die Verriegelung löst.

Im Rahmen einer Ausgestaltung der Erfindung ist angeregt worden, den Transportwagen so weiterzuentwickeln, daß ein Stapel solcher Transportwagen nicht nur geschoben, sondern auch gezogen werden kann. Dabei muß jedoch im Gegensatz zum bisher bekannten Stand der Technik sichergestellt sein, daß während des Transportes eines Stapels von Transportwagen die Bremsen des letzten Transportwagens gelöst sind.

Dieser Anregung wird erfindungsgemäß dadurch entsprochen, daß ein nahe den Rohrpfosten schwenkbar am Fahrgestell gelagerter, mit der Bremseinrichtung verbundener Verriegelungshebel vorgesehen ist, der zum lösbaren Verriegeln mit einem ebenfalls am Fahrgestell schwenkbar angeordneten Rastelement bestimmt ist, wobei im verriegelten Zustand des Verriegelungshebels mit dem Rastelement die Bremseinrichtung vom Verriegelungshebel außer Funktion gesetzt ist und wobei das Rastelement mit dem Verbindungsteil so verbunden ist, daß beim Verschwenken der Schiebeeinrichtung eine Entriegelung des Verriegelungshebels mit dem Rastelement erfolgt.

Will man einen Stapel dieser Transportwagen ziehen, so genügt es, beim letzten Wagen des Stapel den Verriegelungshebel, beispielsweise mit dem Fuß, in die mit dem Rastelement zusammenwirkende Verriegelungsposition zu drücken. Da der Verriegelungshebel in vorteilhafter Weise mit dem Bremsgestänge der Bremseinrichtung verbunden ist, drückt dieser beim Verriegelungsvorgang das Bremsgestänge etwas nach oben, so daß die auf die hinteren Fahrrollen einwirkende Bremskraft aufgehoben ist. Da der letzte Transportwagen mit dem vorletzten Wagen des Stapels durch die Kopplungseinrichtung verbunden ist, geht beim Ziehen des Stapels der nunmehr wie alle übrigen Wagen ungebremste letzte Transportwagen nicht verloren.
Will man den letzten Transportwagen, dessen Verriegelungshebel arretiert und dessen Bremsen gelöst sind, einem Stapel Transportwagen entnehmen, so muß in vorteilhafter Weise lediglich die Schiebeeinrichtung verschwenkt werden. Dadurch, daß das Rastelement mit dem Verbindungsteil und dieses wiederum mit der Brems- bzw. Schiebeeinrichtung verbunden ist, bewirkt das Verschwenken der Schiebeeinrichtung ein Bewegen des bevorzugt als Seilzug gestalteten Verbindungsteiles ein Bewegen des Rastelementes derart, daß die Verriegelung des Verriegelungshebels mit dem Rastelement gelöst ist. Da aber durch das Verschwenken der Schiebeeinrichtung auch gleichzeitig das Verriegelungsteil der Kopplungseinrichtung nach unten und damit ebenfalls außer Funktion gebracht wird, kann der jeweils letzte Transportwagen eines Stapels immer mühelos entnommen werden, ganz gleich, welche Lage die Verriegelungshebel einnehmen.
Der besondere Vorteil dieser erfinderischen Erweiterung besteht darin, daß durch eine relativ einfache konstruktive Maßnahme ein Lösen der Bremsen des letzten Transportwagens möglich ist, ohne daß gleichzeitig die durch die Kopplungseinrichtung bewirkte Verbindung des letzten Transportwagens mit dem vorletzten Wagen gelöst wird. Ein Stapel der neuheitsgemäßen Transportwagen läßt sich deshalb nicht nur, wie bisher möglich, schieben, sondern auch bequem ziehen.

Die Neuerung wird anhand von Ausführungsbeispielen näher erläutert. Es zeigt
- Fig. 1: einen Transportwagen in Seitenansicht;
- Fig. 2: zwei ineinandergeschobene Transportwagen gemäß Fig.1;
- Fig. 3: einen Transportwagen nach Fig. 1 mit zusätzlichem Verriegelungshebel sowie
- Fig. 4 und 5: den Verriegelungshebel mit Rasthebel und Rastelement sowie einen Abschnitt des Verbindungsteiles.

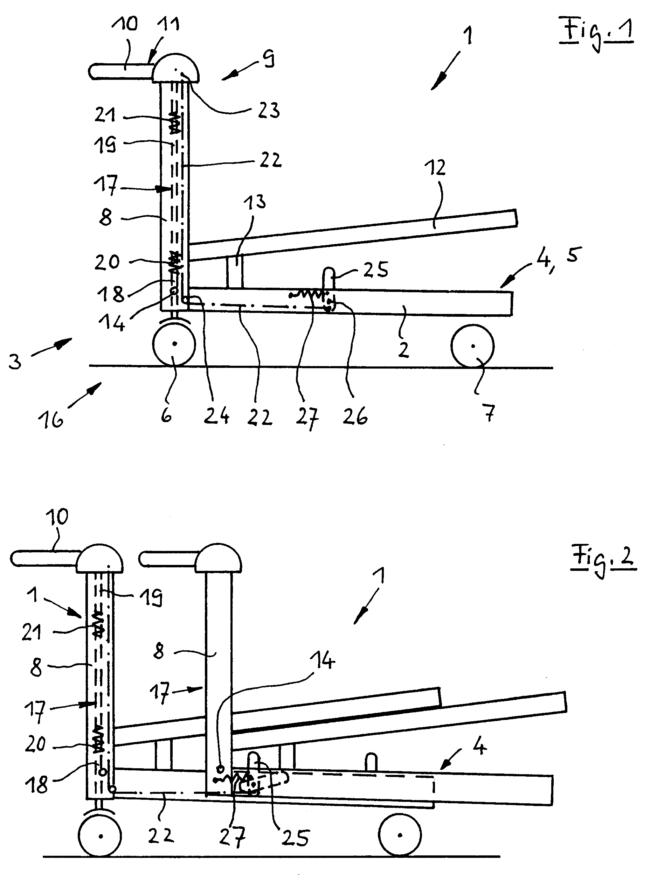

Der in Fig. 1 schematisch dargestellte und von Hand bewegbare Transportwagen 1 weist ein Fahrgestell 2 auf, das an seinem der Schiebeeinrichtung 10 zugeordneten Ende 3 mit zwei Fahrrollen 6, gewöhnlich sind es Bockrollen, und an seinem vorderen Ende wenigstens eine Fahrrolle 7, bevorzugt in Form einer Lenkrolle ausgestattet ist. Am hinteren Ende 3 des Fahrgestelles 2 ragen beidseitig je ein Rohrpfosten 8 nach oben, welche die verschwenkbare Schiebeeinrichtung 10 tragen, die im Prinzip und Funktion jener Schiebeeinrichtung entspricht, wie sie z.B. in der DE 23 64 515 C2 näher beschrieben ist. Von der Schiebeeinrichtung 10 ausgehend und mit dieser gekoppelt führt in jedem Rorpfosten 8 ein federbeaufschlagtes Bremsgestänge 17 nach unten zu je einer der hinteren Fahrrollen 6. Jedes Bremsgestänge 17 besteht aus einer unteren und einer oberen jeweils ebenfalls federbeaufschlagten Stange 18, 19, wobei die Druckfeder 20 der unteren Stange 18 schwächer ist, als die auf die obere Stange 19 wirkende Druckfeder 21. Schiebeeinrichtung 10 und Bremsgestänge 17 bilden eine Bremseinrichtung 16, die dann automatisch auf die hinteren Fahrrollen 6 bremsend wirkt, wenn die Schiebeeinrichtung 10 losgelassen wird und umgekehrt dann gelöst ist, wenn die Schiebeeinrichtung 10 nach oben oder unten verschwenkt wird. Das Fahrgestell 2 weist ferner einen Abstellbereich 12 für Gepäck, Einkaufsgut oder dgl. auf, wobei festzustellen ist, daß diese hier dargestellte Art von Transportwagen 1 nur stellvertretend steht für alle weiteren, im Sinne der Neuerung möglichen Transportwagen 1. So können solche Transportwagen 1 durchaus auch mit wenigstens einer weiteren Abstelleinrichtung, etwa in Form eines nicht näher dargestellten Korbes ausgestattet sein. Der Abstellbereich 12 ist zweckmäßigerweise zusätzlich über zwei Stege 13 auf den Längsträgern 4 des Fahrgestelles 2 abgestützt. Neu ist nunmehr, daß zumindest an einem Schenkel 11 der gewöhnlich von oben betrachtet U-förmigen Schiebeeinrichtung 10 und im Bereich des oberen Endes 9 eines der beiden Rohrpfosten 8 angeordnet ein Verbindungsteil 22 in der bevorzugten Form eines Seilzuges an die bewegliche Schiebeeinrichtung 10 angelenkt ist. Von dieser Anlenkstelle 23 führt das elastische Verbindungsteil 22 im Rohrpfosten 8 nach unten, wird an einer Umlenkrolle 24 um etwa 90° in Richtung vorderes Ende des Transportwagens 1 umgeleitet und führt zu einem Verriegelungsteil 25, das in einem der beiden hohlen seitlichen Längsträger 4 des Fahrgestelles 2 um eine horizontale Achse 26 verschwenkbar gelagert ist. Das Verbindungsteil 22 ist mit dem Verriegelungsteil 25 bewegbar verbunden. Das Verriegelungsteil 25 ragt über die obere Begrenzung 5 des Längsträgers 4 hinaus. Über der horizontalen Achse 26 ist eine Zugfeder 27 mit einem Ende mit dem Verriegelungsteil 25 und mit ihrem anderen Ende ortsfest mit dem Längsträger 4 verbunden. Die Zugfeder 27 sowie das Verbindungsteil 22 sind mit dem Verriegelungsteil 25 so verbunden, daß, bezogen auf die Zeichnung, beim Verschwenken der Schiebeeinrichtung 10 das Verriegelungsteil 25 gegen die Wirkung der Zugfeder 22 nach rechts und nach unten geschwenkt wird und bei Loslassen der Schiebeeinrichtung 10 von der Zugfeder 27 wieder in die ursprüngliche Lage zurückbewegt wird. Die beiden Bremsgestänge 17 sind, wie in der DE 85 17 521.8 beschrieben, durch eine Querverbindung 14 miteinander verbunden. Diese Querverbindung 14 dient dazu, daß die Bremsen sämtlicher (mit Ausnahme des letzten Wagens) in einem Stapel aufgereihter Transportwagen 1 gelöst sind. Dies ist möglich, weil die Längsträger 4 der Transportwagen 1 nach hinten leicht ansteigen und ihre Lage so gewählt ist, daß beim Ineinanderschieben der Transportwagen 1 die Längsträger 4 des jeweils rückwärtigen Transportwagens 1 die Querverbindung 14 des jeweiligen vorausbefindlichen Transportwagens 1 nach oben drücken und somit die Bremsen lösen. Dadurch ist sichergestellt, daß ein Stapel Transportwagen 1, besonders dann, wenn die hinteren Fahrrollen 6 Bockrollen sind, auf Kurvenbahnen bewegbar ist.

Fig. 2 zeigt zwei ineinandergeschobene Transportwagen 1. Man erkennt in der Zeichnung, daß der links dargestellte rückwärtige Transportwagen 1 vom vorausbefindlichen Transportwagen 1 nicht gelöst werden kann, weil beim Versuch, den Transportwagen 1 zu entnehmen, das Verriegelungsteil 25 des rückwärtigen Transportwagens 1 an die Querverbindung 14 des vorausbefindlichen Transportwagens 1 anstoßen würde. Erst wenn die Schiebeeinrichtung 10 des rückwärtigen Transportwagens 1 verschwenkt wird, bewegt sich das Verriegelungsteil 25 in der Zeichnung nach rechts unten (strichpunktiert dargestellt) und der rückwärtige Transportwagen 1 kann dem Stapel entnommen werden, wobei das nach unten geschwenkte Verriegelungsteil 25 die Querverbindung 14 des vorausbefindlichen Transportwagens 1 unterfährt. Gleiches gilt auch, wenn der rückwärtige Transportwagen 1 in den vorausbefindlichen Transportwagen 1 eingeschoben wird. Befindet sich der rückwärtige Transportwagen 1 in gestapelter Stellung und läßt man die Schiebeeinrichtung 10 los, so bewegt sich das Verriegelungsteil 25 nach oben und hintergreift die Querverbindung 14 des vorausbefindlichen Transportwagens 1. Anstelle der eben beschriebenen, mit den Bremsgestängen 17 verbundenen Querverbindung 14 kann auch eine andere beispielsweise ortsfeste und etwa die Rohrpfosten 8 verbindende Querverbindung oder dgl., als ein Teil des Transportwagens 1 Verwendung finden. Um zu vermeiden, daß bei den im Stapel befindlichen Transportwagen 1 durch Anheben der Querverbindung 14 und durch Anheben der Bremsgestänge 17 auch die Schiebeeinrichtung 10 verschwenkt und damit die Verriegelungsteile 25 nach unten bewegt sind, was ein Lösen der Transportwagen 1 zumindest auf Gefällstrecken bewirken würde, sind die Bremsgestänge 17 zweigeteilt. Jedes Bremsgestänge 17 weist daher eine mit einer Druckfeder 20 beaufschlagte untere Stange 18 und eine mit einer Druckfeder 21 beaufschlagte obere Stange 19 auf, wobei die untere Druckfeder 20 schwächer ist, als die obere 21. Beim Anheben der Querverbindung 14 wird deshalb nur die untere Stange 18, die auch über einen Bremsschuh auf eine Fahrrolle 6 wirkt, angehoben, nicht aber die obere Stange 19. Die Schiebeeinrichtung 10 wird somit bei diesem Vorgang nicht bewegt. Anstelle eines Verriegelungsteiles 25 können an jedem der beiden Längsträger 4 des Fahrgestelles 2 je ein gleiches Verriegelungsteil 25 und damit zwei gleiche Zugfedern 27 und ebenso zwei gleiche Verbindungsteile 22, die zur Schiebeeinrichtung 10 führen, und zum Anschlagen an Querverbindungen 10 bestimmt sind, vorgesehen sein.

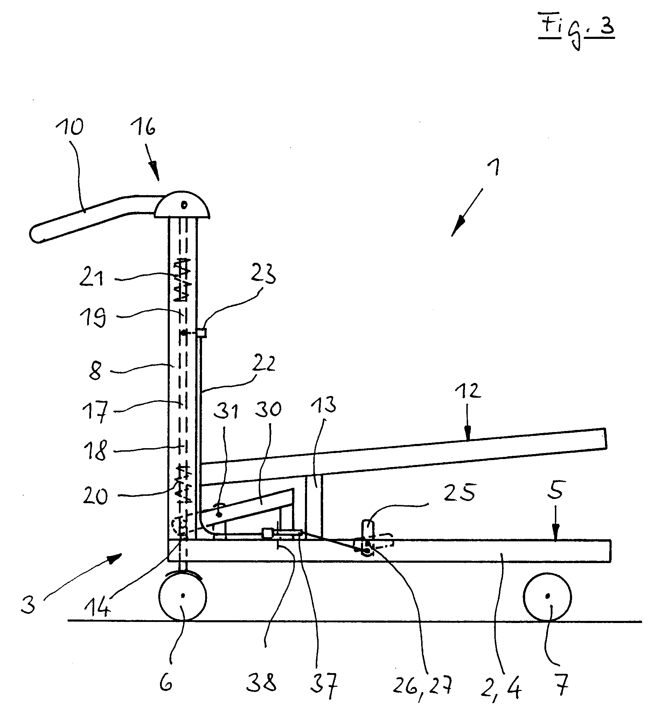

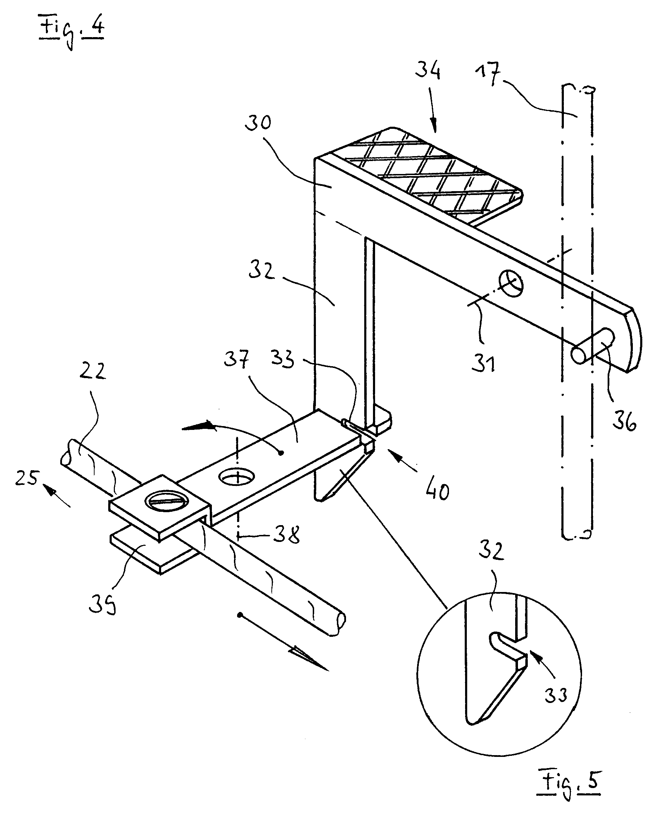

Der in Fig. 3 dargestellte Transportwagen 1 entspricht in seiner Grundkonzeption dem in Fig. 1 beschriebenen Transportwagen 1. Bei diesem Ausführungsbeispiel ist zumindest mit einem der beiden Bremsgestänge 17 ein Verbindungsteil 22 in der bevorzugten Form eines Seilzuges angelenkt. Wie bereits in Fig. 1 beschrieben, führt von der Anlenkstelle 23 das elastische Verbindungsteil 22 nach unten, wird um etwa 90° in Richtung vorderes Ende des Transportwagens 1 umgeleitet und führt zu einem Verriegelungsteil 25, das in einem der beiden hohlen seitlichen Längsträger 4 des Fahrgestelles 2 um eine horizontale Achse 26 verschwenkbar gelagert ist. Auch das Verbindungsteil 22 ist mit dem Verriegelungsteil 25 bewegbar verbunden. Das Verriegelungsteil 25 ragt über die obere Begrenzung 5 des Längsträgers 4 hinaus. Über der horizontalen Achse 26 ist ebenfalls eine Zugfeder 27 mit einem Ende mit dem Verriegelungsteil 25 und mit ihrem anderen Ende ortsfest mit dem Längsträger 4 verbunden. Die Zugfeder 27 sowie das Verbindungsteil 22 sind mit dem Verriegelungsteil 25 so verbunden, daß bezogen auf die Zeichnung, beim Verschwenken der Schiebeeinrichtung 10 das Verriegelungsteil 25 gegen die Wirkung der Zugfeder 22 nach rechts und nach unten geschwenkt wird und bei Loslassen der Schiebeeinrichtung 10 von der Zugfeder 27 wieder in die ursprüngliche Lage zurückbewegt wird. Ebenso sind die beiden Bremsgestänge 17, wie in der DE 85 17 521.8 beschrieben, durch eine Querverbindung 14 miteinander verbunden. Die Querverbindung 14 dient, wie erwähnt, dazu, daß die Bremsen sämtlicher (mit Ausnahme des letzten Wagens) in einem Stapel aufgereihter Transportwagen 1 gelöst sind. Dies ist möglich, weil die Längsträger 4 der Transportwagen 1, wie in Fig. 1 beschrieben, nach hinten leicht ansteigen und ihre Lage so gewählt ist, daß beim Ineinanderschieben der Transportwagen 1 die Längsträger 4 des jeweils rückwärtigen Transportwagens 1 die Querverbindung 14 des jeweiligen vorausbefindlichen Transportwagens 1 nach oben drücken und somit die Bremsen lösen. Dadurch ist wieder sichergestellt, daß ein Stapel Transportwagen 1, besonders dann, wenn die hinteren Fahrrollen 6 Bockrollen sind, auf Kurvenbahnen bewegbar ist. Neu ist nun, daß nahe den Rohrpfosten 8 ein schwenkbar am Fahrgestell 2 gelagerter, mit mindestens einem der beiden Bremsgestänge 17, und damit mit der Bremseinrichtung 16, verbundener Verriegelungshebel 30 vorgesehen ist. Der Verriegelungshebel 30 ist auf einer waagrechten Achse 31 gelagert und zum lösbaren Verriegeln mit einem ebenfalls am Fahrgestell 2 angeordneten, um eine senkrechte Achse 38 schwenkbar gelagerten Rastelement 37 bestimmt, wobei im verriegelten Zustand des Verriegelungshebels 30 mit dem Rastelement 37 das Bremsgestänge 17 vom Verriegelungshebel 30 in beiden Rohrpfosten 8 etwas angehoben und dadurch die auf die hinteren Fahrrollen 6 einwirkende Bremseinrichtung 16 außer Funktion gesetzt ist. Wie in den Fig. 4 und 5 näher gezeigt, ist das Rastelement 37 mit dem Verbindungsteil 22 so verbunden, daß beim Verschwenken der Schiebeeinrichtung 10 eine Entriegelung des Verriegelungshebels 30 mit dem Rastelement 37 erfolgt.

Die Figuren 4 und 5 zeigen das Zusammenwirken von Verbindungsteil 22, Rastelement 37, Verriegelungshebel 30 und Bremsgestänge 17, wobei aus Gründen einer deutlichen Darstellung und zum besseren Verständnis der Funktion unwichtige Details wegelassen sind. Das Rastelement 37 ist auf einer senkrechten Achse 38 durch nicht näher dargestellte Anschläge begrenzt verschwenkbar am Fahrgestell 2 gelagert. Der zur Lagerung erforderliche Achszapfen und dessen Befestigung am Fahrgestell 2 ist nicht näher gezeigt. Das Rastelement 37 weist einen gabelförmigen Vorsprung 39 auf, durch den das zum Verriegelungsteil 25 weiterführende Verbindungsteil 22 geführt ist. Das Rastelement 37 ist mit dem Verbindungsteil 22 ortsfest, also fest verbunden. Gegenüber dem gabelförmigen Vorsprung 39 und getrennt durch die senkrechte Achse 38 besitzt das Rastelement 37 einen Einschnitt 40. Die Zeichnung zeigt, daß der Verriegelungshebel 30 mit dem Rastelement 37 verriegelt ist. Der Verriegelungshebel 30 besitzt zu diesem Zweck einen nach unten weisenden Vorsprung 32, an den sich in einem Winkel ein Tretabschnitt 34 anschließt, der auf der waagrechten Achse 31 verschwenkbar gelagert ist. Der zur Lagerung erforderliche Achszapfen sowie dessen Befestigung am Fahrgestell 2 ist nicht näher dargestellt, da diese Art der Befestigung und Lagerung, wie auch im Falle des Rastelementes 37, dem Fachmann geläufig ist. Gegenüber dem Vorsprung 37 und getrennt durch die waagrechte Achse 31 ist der Verriegelungshebel 30 bzw. der Tretabschnitt 34 mit einem nicht näher dargestellten Vorsprung 36 ausgestattet, der zum Anlenken des Verriegelungshebels 30 an eines der beiden Bremsgestänge 17 bestimmt ist. Auf Höhe des Einschnittes 40 am Rastelement 37 weist der Vorsprung 32 des Verriegelungshebels 30, siehe Fig. 5, ebenfalls einen Einschnitt 33 auf, die (33, 40) in verriegeltem Zustand von Verriegelungshebel 30 und Rastelement 37 ineinander greifen. Wird nun die Schiebeeinrichtung 10 verschwenkt, so wird das Bremsgestänge 17 angehoben und das Verbindungsteil 22 in Pfeilrichtung, also zum Betrachter der Zeichnung nach rechts bewegt. Dies bewirkt, daß das Rastelement 37 eine Schwenkbewegung in Pfeilrichtung um die senkrechte Achse 38 vollführt. Durch diese Schwenkbewegung wird die Verriegelung zwischen dem Verriegelungshebel 30 und dem Rastelement 37 gelöst. Läßt man die Schiebeeinrichtung 10 los, so wird das Bremsgestänge 17 durch die obere stärkere Druckfeder 21 wieder nach unten gedrückt, um die Bremsfunktion zu erfüllen. Dabei wird der Verriegelungshebel 30 in der Zeichnung rechtsdrehend verschwenkt und der Vorsprung 32 angehoben, noch ehe das Rastelement 37 durch Aufsuchen seiner Sperrlage wieder mit dem Verriegelungshebel 30 eine Verriegelung herbeiführen kann. In dieser Lage ist der Vorsprung 32 über dem Rastelement 37 angeordnet. Er (32) ist mit dem Rastelement 37 nicht verriegelt. Will man nun einen Stapel Transportwagen 1 ziehen, so muß die Bremseinrichtung 16 des letzten Transportwagens 1 gelöst sein. Um dies zu erreichen, muß der Verriegelungshebel 30 durch Treten mit dem Fuß auf den Tretabschnitt 34 nach unten gedrückt werden, um mit Hilfe des Vorsprunges 32 mit dem Rastelement 37 zu verriegeln und um das geteilte Bremsgestänge 17 gegen die Wirkung der schwächeren Druckfeder 20 etwas anzuheben und somit die Bremseinrichtung 16 zu lösen. Beim erneuten Verschwenken der Schiebeeinrichtung 10 wird das Rastelement 37 und das Verriegelungsteil 25 gelöst. Das gleichzeitige Lösen des Verriegelungsteiles 25 ist nötig, damit der Transportwagen 1 einem Stapel entnommen werden kann. Das Stapeln, also das Ineinanderschieben der in bekannter Weise konisch gestalteten Transportwagen 1, sowie das Lösen der einzelnen Transportwagen 1 vom Stapel erfolgt in gleicher Weise, wie dies bereits im deutschen Gebrauchsmuster G 92 12 615.4 der Anmelderin in Fig. 2 beschrieben ist. Eine erneute Beschreibung erübrigt sich deshalb an dieser Stelle.
Es bleibt anzumerken, daß der Verriegelungshebel 30 zwei Tretabschnitte 34 aufweisen kann, die an den Enden einer Querstange angeordnet mit je einem Bremsgestänge 17 gelenkig verbunden sind.
Ferner bleibt zu erwähnen, daß die Transportwagen 1 in bekannter Weise konisch so gestaltet sind, daß sie sich ineinanderschieben lassen.

## Patentansprüche

1. Von Hand bewegbarer Transportwagen, der in einen gleichen Transportwagen einschiebbar ist, der mit wenigstens einem Abstellbereich für Gepäck, Einkaufsgut oder dgl. ausgestattet ist und der ein Fahrgestell aufweist, das an dem der Schiebeeinrichtung zugeordneten Ende zwei Fahrrollen und an seinem vorderen Ende wenigstens eine Fahrrolle trägt, wobei die auf Höhe der Schiebeeinrichtung befindlichen hinteren Fahrrollen über eine Bremseinrichtung mit der auf zwei aufrechten Rohrpfosten ruhenden und verschwenkbar gelagerten Schiebeeinrichtung derart in Verbindung stehen, daß bei einem Loslassen der Schiebeeinrichtung die hinteren Fahrrollen automatisch gebremst sind und eine Kopplungseinrichtung vorgesehen ist, die ein Ankoppeln des Transportwagens an einen weiteren Transportwagen erlaubt, wobei die Kopplungseinrichtung ein Verriegelungsteil aufweist, das in gekoppeltem Zustand einen Teil des weiteren Transportwagens hintergreift, dadurch **gekennzeichnet,** daß das Verriegelungsteil (25) verschwenkbar gelagert, und federbeaufschlagt, mittels eines Verbindungsteiles (22) mit der Schiebeeinrichtung (10) verbunden und durch Verschwenken der Schiebeeinrichtung (10) bewegbar ist.

2. Transportwagen nach Anspruch 1, dadurch **gekennzeichnet,** daß das Verriegelungsteil (25) in einem der beiden Längsträger (4) des Fahrgestelles (2) untergebracht ist und über die obere Begrenzung (5) des Längsträgers (4) hinausragt.

3. Transportwagen nach Anspruch 1 oder 2, dadurch **gekennzeichnet,** daß das Verbindungsteil (22) durch einen Seilzug gebildet ist.

4. Transportwagen nach einem der Ansprüche 1 bis 3, dadurch **gekennzeichnet,** daß das Verbindungsteil (22), ausgehend von der Schiebeeinrichtung (10), durch einen der Rohrpfosten (8) hindurch zum Verriegelungsteil (25) geführt ist.

5. Transportwagen nach einem der Ansprüche 1 bis 4, dadurch **gekennzeichnet,** daß das Verriegelungsteil (25) um eine horizontale Achse (26) verschwenkbar gelagert ist.

6. Transportwagen nach einem der Ansprüche 1 bis 5, dadurch **gekennzeichnet,** daß das vom Verriegelungsteil (25) hintergriffene Teil durch eine die Bremsgestänge (17) verbindende Querverbindung (14) gebildet ist.

7. Transportwagen nach einem der Ansprüche 1 bis 5, dadurch **gekennzeichnet,** daß das vom Verriegelungsteil (25) hintergriffene Teil durch eine ortsfest am Transportwagen (1) angeordnete Querverbindung gebildet ist.

8. Transportwagen nach einem der Ansprüche 1 bis 7, dadurch **gekennzeichnet,** daß an jedem der beiden Längsträger (4) ein Verriegelungsteil (25) angeordnet und dementsprechend zwei Zugfedern (27) und zwei Verbindungsteile (22) vorgesehen sind.

9. Transportwagen nach einem der Ansprüche 1 bis 8, dadurch **gekennzeichnet,** daß ein nahe den Rohrpfosten (8) schwenkbar am Fahrgestell (2) gelagerter, mit der Bremseinrichtung (16) verbundener Verriegelungshebel (30) vorgesehen ist, der zum lösbaren Verriegeln mit einem ebenfalls am Fahrgestell (2) schwenkbar angeordneten Rastelement (37) bestimmt ist, wobei im verriegelten Zustand des Verriegelungshebels (30) mit dem Rastelement (37) die Bremseinrichtung (16) vom Verriegelungshebel (30) außer Funktion gesetzt ist und wobei das Rastelement (37) mit dem Verbindungsteil (22) so verbunden ist, daß beim Verschwenken der Schiebeeinrichtung (10) eine Entriegelung des Verriegelungshebels (30) mit dem Rastelement (37) erfolgt.

10. Transportwagen nach einem der Ansprüche 1 bis 9, dadurch **gekennzeichnet,** daß der Verriegelungshebel (30) auf einer waagrechten Achse (31) gelagert ist.

11. Transportwagen nach einem der Ansprüche 1 bis 10, dadurch **gekennzeichnet,** daß der Verriegelungshebel (30) zum Anheben des Bremsgestänges (17) bestimmt ist.

12. Transportwagen nach einem der Ansprüche 1 bis 11, dadurch **gekennzeichnet,** daß der Verriegelungshebel (30) einen nach unten gerichteten Vorsprung (32) zum Eingreifen in das Rastelement (37) aufweist.

13. Transportwagen nach einem der Ansprüche 1 bis 12, dadurch **gekennzeichnet,** daß der Verriegelungshebel (30) wenigstens einen Tretabschnitt (34) aufweist.

14. Transportwagen nach einem der Ansprüche 1 bis 13, dadurch **gekennzeichnet,** daß das Rastelement (37) auf einer senkrechten Achse (38) gelagert ist.

15. Transportwagen nach einem der Ansprüche 1 bis 14, dadurch **gekennzeichnet,** daß der Verriegelungshebel (30) und das Rastelement (37) je einen Einschnitt (33, 40) aufweisen, die in verriegeltem Zustand von Verriegelungshebel (30) und Rastelement (37) ineinandergreifen.

16. Transportwagen nach einem der Ansprüche 1 bis 15, dadurch **gekennzeichnet,** daß das Verbindungsteil (22) an einem gabelförmigen Vorsprung (39) des Rastelementes (37) befestigt ist.

17. Transportwagen nach einem der Ansprüche 1 bis 16, dadurch **gekennzeichnet,** daß das Verbindungsteil (22) vom Rastelement (37) aus weiter zum Verriegelungsteil (25) geführt ist.

## Claims

1. A manually-movable trolley slidable into an identical trolley, and provided with at least one storage area for luggage, shopping or the like, and having a wheel frame carrying two castors on the end associated with the pushing means and at least one castor on its front end, wherein the rear castors situated level with the pushing means are connected via braking means to the tiltably mounted pushing means, resting on two upright tubular posts, in such a manner that when the pushing means is released the rear castors are automatically locked and linking means are provided allowing the trolley to interlock with another trolley, wherein the linking means have a locking member engaging when in a linked state behind a member of the other trolley, **characterised** in that the locking member (25) is tiltably mounted, spring-loaded, connected by means of a connecting member (22) to the pushing means (10), and displaceable by tilting the pushing means (10).

2. A trolley according to Claim 1, **characterised** in that the locking member (25) is housed in one of the two elongate carriers (4) of the wheel frame (2) and projects beyond the upper boundary (5) of the elongate carrier (4).

3. A trolley according to Claim 1 or 2, **characterised** in that the connecting member (22) is formed by a cable.

4. A trolley according to any one of Claims 1 to 3, **characterised** in that the connecting member (22) starts from the pushing means (10) and extends through one of the tubular posts (8) to the locking member (25).

5. A trolley according to any one of Claims 1 to 4, **characterised** in that the locking member (25) is tiltably mounted about a horizontal axle (26).

6. A trolley according to any one of Claims 1 to 5, **characterised** in that the member engaged from behind by the locking member (25) is constructed by a transverse connection (14) connecting the braking linkage (17).

7. A trolley according to any one of Claims 1 to 5, **characterised** in that the member engaged from behind by the locking member (25) is constructed by a transverse connection arranged to be stationary on the trolley (1).

8. A trolley according to any one of Claims 1 to 7, **characterised** in that on each of the two elongate carriers (4), a locking member (25) is arranged and two tension springs (27) and two connecting members (22) are correspondingly provided.

9. A trolley according to any one of Claims 1 to 8, **characterised** in that a locking lever (30) connected to the braking means (16) and mounted to be tiltable on the wheel frame and adjacent the tubular posts (8) is provided and intended for releasable locking to a catch (37) tiltably arranged similarly on the wheel frame (2), wherein, when the locking lever (30) is locked to the catch (37), operation of the braking means (16) is stopped by the locking lever (30), and wherein the catch (37) is connected to the connecting member (22) in such a manner that, when the pushing means (10) is tilted, unlocking of the locking lever (30) occurs with the catch (37).

10. A trolley according to any one of Claims 1 to 9, **characterised** in that the locking lever (30) is mounted on a horizontal axle (31).

11. A trolley according to any one of Claims 1 to 10, **characterised** in that the locking lever (30) is intended to lift the braking linkage (17).

12. A trolley according to any one of Claims 1 to 11, **characterised** in that the locking lever (30) has a downwardly pointing projection (32) for engagement in the catch (37).

13. A trolley according to any one of Claims 1 to 12, **characterised** in that the locking lever (30) has at least one pedal section (34).

14. A trolley according to any one of Claims 1 to 13, **characterised** in that the catch (37) is mounted on a vertical axle (38).

15. A trolley according to any one of Claims 1 to 14, **characterised** in that the locking lever (30) and the catch (37) have a respective recess (33, 40), which recesses engage in each other when the locking lever (30) and the catch (37) are locked.

16. A trolley according to any one of Claims 1 to 15, **characterised** in that the connecting member (22) is fastened to a fork-shaped projection (39) of the catch (37).

17. A trolley according to any one of Claims 1 to 16, **characterised** in that the connecting member (22) extends from the catch (37) to the locking member (25).

## Revendications

1. Chariot de transport déplaçable à la main, qui peut être inséré dans un chariot de transport identique, est équipé d'au moins une zone reposoir pour des bagages, des marchandises ou objets similaires, et présente un châssis portant deux roulettes à l'extrémité affectée au dispositif de poussée, et au moins une roulette à son extrémité antérieure, les roulettes postérieures situées à la hauteur du dispositif de poussée étant en liaison, par l'intermédiaire d'un dispositif de freinage, avec le dispositif de poussée reposant sur deux montants tubulaires verticaux et monté à pivotement, de telle sorte que, lors d'un relâchement du dispositif de poussée, les roulettes postérieures soient automatiquement freinées, et il est prévu un dispositif d'accouplement autorisant un accouplement du chariot de transport à un autre chariot de transport, le dispositif d'accouplement comportant une pièce de verrouillage qui, à l'état accouplé, emprisonne par-derrière une pièce de l'autre chariot de transport, caractérisé par le fait que la pièce de verrouillage (25) est reliée au dispositif de poussée (10) au moyen d'une pièce de solidarisation (22), avec montage pivotant et sollicitation élastique, et peut être mise en mouvement par pivotement du dispositif de poussée (10).

2. Chariot de transport selon la revendication 1, caractérisé par le fait que la pièce de verrouillage (25) est logée dans l'un des deux supports longitudinaux (4) du châssis (2), et fait saillie au-delà de la délimitation supérieure (5) du support longitudinal (4).

3. Chariot de transport selon la revendication 1 ou 2, caractérisé par le fait que la pièce de solidarisation (22) est formée d'un câble de traction.

4. Chariot de transport selon l'une des revendications 1 à 3, caractérisé par le fait que la pièce de solidarisation (22) parcourt l'un des montants tubulaires (8) à partir du dispositif de poussée (10), et gagne la pièce de verrouillage (25).

5. Chariot de transport selon l'une des revendications 1 à 4, caractérisé par le fait que la pièce de verrouillage (25) est montée à pivotement autour d'un axe horizontal (26).

6. Chariot de transport selon l'une des revendications 1 à 5, caractérisé par le fait que la pièce, emprisonnée par-derrière par la pièce de verrouillage (25), est formée d'une solidarisation transversale (14) reliant les tringleries de freinage (17).

7. Chariot de transport selon l'une des revendications 1 à 5, caractérisé par le fait que la pièce, emprisonnée par-derrière par la pièce de verrouillage (25), est formée d'une solidarisation transversale occupant une position fixe sur le chariot de transport (1).

8. Chariot de transport selon l'une des revendications 1 à 7, caractérisé par le fait qu'une pièce de verrouillage (25) est disposée sur chacun des deux supports longitudinaux (4), deux ressorts de traction (27) et deux pièces de solidarisation (22) étant prévus de façon correspondante.

9. Chariot de transport selon l'une des revendications 1 à 8, caractérisé par le fait qu'un levier de verrouillage (30) prévu à proximité des montants tubulaires (8), monté à pivotement sur le châssis (2) et relié au dispositif de freinage (16), est destiné à se verrouiller, de manière libérable, avec un élément encliquetable (37) semblablement disposé sur le châssis (2) avec faculté de pivotement, le dispositif de freinage (16) étant mis hors fonction par le levier de verrouillage (30) à l'état dans lequel ledit levier de verrouillage (30) est verrouillé avec l'élément encliquetable (37), et l'élément encliquetable (37) étant relié à la pièce de solidarisation (22) de façon telle qu'un déverrouillage du levier de verrouillage (30), d'avec l'élément encliquetable (37), s'opère lors du pivotement du dispositif de poussée (10).

10. Chariot de transport selon l'une des revendications 1 à 9, caractérisé par le fait que le levier de verrouillage (30) est monté sur un axe horizontal (31).

11. Chariot de transport selon l'une des revendications 1 à 10, caractérisé par le fait que le levier de verrouillage (30) est destiné à soulever la tringlerie de freinage (17).

12. Chariot de transport selon l'une des revendications 1 à 11, caractérisé par le fait que le levier de verrouillage (30) présente un appendice (32) dirigé vers le bas, en vue de pénétrer dans l'élément encliquetable (37).

13. Chariot de transport selon l'une des revendications 1 à 12, caractérisé par le fait que le levier de verrouillage (30) comporte au moins une pédale (34).

14. Chariot de transport selon l'une des revendications 1 à 13, caractérisé par le fait que l'élément encliquetable (37) est monté sur un axe vertical (38).

15. Chariot de transport selon l'une des revendications 1 à 14, caractérisé par le fait que le levier de verrouillage (30) et l'élément encliquetable (37) présentent une encoche respective (33, 40), lesdites encoches s'interpénétrant à l'état verrouillé du levier de verrouillage (30) et de l'élément encliquetable (37).

16. Chariot de transport selon l'une des revendications 1 à 15, caractérisé par le fait que la pièce de solidarisation (22) est fixée à une protubérance (39) de l'élément encliquetable (37), configurée en une fourche.

17. Chariot de transport selon l'une des revendications 1 à 16, caractérisé par le fait que la pièce de solidarisation (22) gagne la pièce de verrouillage (25) à partir de l'élément encliquetable (37).
